# EUROPEAN PATENT SPECIFICATION

(11) **EP 2 985 224 B1**
(45) Date of publication and mention of the grant of the patent: **19.06.2019**
(21) Application number: 15180538.9
(22) Date of filing: 11.08.2015
(51) Int. Cl.: B64D 13/06, F25B 9/00, F24F 13/02, F02C 6/08

(54) **MULTI-PORT COMPRESSOR MANIFOLD WITH INTEGRAL BYPASS VALVE**
KOMPRESSORVERTEILER MIT MEHREREN ANSCHLÜSSEN MIT INTEGRIERTEM UMGEHUNGSVENTIL
COLLECTEUR DE COMPRESSEUR MULTIPORT AVEC SOUPAPE DE DÉRIVATION INTÉGRÉE

(30) Priority: 12.08.2014 US 201414457274
(43) Date of publication of application: 17.02.2016
(73) Proprietor: Hamilton Sundstrand Corporation, Charlotte, NC 28217 (US)
(72) Inventor: ARMY, Jr., Donald E., Enfield, CT Connecticut 06082 (US)
(74) Representative: Dehns

(56) References cited:
- EP-A1- 1 492 704
- GB-A- 1 340 384
- US-A- 6 148 622
- US-A1- 2001 025 507
- US-A1- 2003 084 681
- US-A1- 2004 194 493
- US-A1- 2007 113 579

## Description

### BACKGROUND

The subject matter disclosed herein generally relates to air generation units for aircraft, comprising a multi-port compressor manifold with an integral bypass valve.

In some modern aircraft it is necessary to ventilate and control the temperature of the interior of the aircraft, which may be achieved with an air conditioning unit or air generation unit. Typically, outside air is the primary means of meeting the various aircraft air conditioning requirements. The unit extracts bleed air from the aircraft engine and subsequently conditions the bleed air for delivery to the cabin. However, a significant amount of energy may be required to bring outside air into a pressurized aircraft during cruise where ambient pressures are low. As such, compressor systems of the air generation unit may elevate the air to pressures beyond the needs of the cabin, which may consume large amounts of energy and fuel. Accordingly, it is desirable to provide an air generation unit with a compact and efficient compressor bypass.

EP 1 492 704 relates to an air conditioning system. US 2004/0194492 relates to an air generation unit.

### BRIEF SUMMARY

In one aspect, an air generation unit for an aircraft is provided as defined in claim 1. The air generation unit includes a heat exchanger having a primary heat exchanger and a secondary heat exchanger, the heat exchanger configured to receive and cool a fluid, two compressors configured to receive the cooled fluid from the primary heat exchanger, and a compressor manifold coupled to the heat exchanger. The compressor manifold includes a primary section having a primary inlet port, a first primary outlet port, and a second primary outlet port, the primary section configured to receive a fluid from the primary heat exchanger through the primary inlet port and direct the fluid to the two compressors through the first and second primary outlet ports. The manifold further includes a secondary section having a first secondary inlet port, a second secondary inlet port, and a secondary outlet port, the secondary section configured to receive the fluid from the two compressors through the first and second secondary inlet ports and direct the fluid to the secondary heat exchanger through the secondary outlet port. The manifold further includes a bypass valve positioned between the primary section and the secondary section, the bypass valve movable between a closed position and an open position where the bypass valve fluidly couples the primary section and the secondary section to bypass the two compressors.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of an exemplary air generation unit;
FIG. 2 is a perspective view of an exemplary compressor manifold that may be used with the air generation unit shown in FIG. 1;
FIG. 3 is a schematic illustration of the compressor manifold shown in FIG. 2;
FIG. 4 is a perspective view of another exemplary compressor manifold that may be used with the air generation unit shown in FIG. 1; and
FIG. 5 is a schematic illustration of the compressor manifold shown in FIG. 4.

The detailed description explains embodiments of the invention, together with advantages and features, by way of example with reference to the drawings.

### DETAILED DESCRIPTION

Described herein are systems and methods for improved efficiency and performance of air generation units. The systems include a multi-port compressor manifold with an integral bypass valve to direct air from a primary heat exchanger directly to a secondary heat exchanger, thereby bypassing a system compressor.

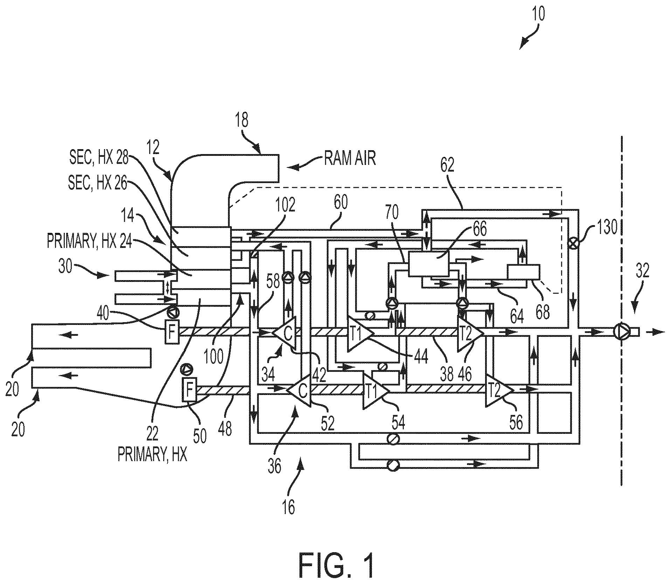

FIG. 1 illustrates an exemplary air generation unit (AGU) or system 10 that generally includes a ram air duct 12, a dual heat exchanger 14, and an air cycle machine (ACM) 16.

Ram air duct 12 includes an inlet 18 and one or more outlets 20. Inlet 18 receives ram air as a cooling fluid from a source outside of system 10 such as ambient air outside of an aircraft (not shown). The ram air passes through dual heat exchanger 14 for heat exchange therein and passes to outlet 20.

Dual heat exchanger 14 includes a first primary heat exchanger 22, a second primary heat exchanger 24, a first secondary heat exchanger 26, and a second secondary heat exchanger 28. In the exemplary embodiment, heat exchanger 14 is a plate fin air-to-air counterflow heat exchanger that includes a stack of brazed, thermally interconductive air flow sections or layers (not shown). Hot air (e.g., from engine bleed) and cold air (e.g., ram air) are forced through alternate layers in order to exchange heat. These alternatively stacked ram and bleed layers are joined together along a thermally conductive medium called the parting sheet (not shown), and heat from the bleed layers is transmitted through the parting sheets to the ram air flow. However, heat exchanger 14 may be any suitable heat exchanger that enables system 10 to function as described herein.

ACM 16 delivers fluid between a fluid supply line 30 and a cabin supply line 32, and generally includes a first compression assembly 34 and a second compression assembly 36. First compression assembly 34 includes a shaft 38 mechanically connecting a fan 40, a compressor 42, a turbine 44, and a turbine 46. Second compression assembly 36 includes a shaft 48 mechanically connecting a fan 50, a compressor 52, a turbine 54, and a turbine 56.

Fluid supply line 30 receives and introduces a supply air into system 10. Typically, the air is hot, compressed bleed air directed from the compressor stages of a gas turbine engine (not shown) or an auxiliary power unit (not shown). Supply line 30 directs the bleed air into, through and out of primary heat exchangers 22, 24 where the bleed air passes in heat exchange relationship with the ram cooling air. The cooled bleed air then exits heat exchangers 22, 24 into a multi-port compressor manifold 100 that includes a bypass valve 102. The cooled bleed air can then be directed to secondary heat exchanger 26, 28 through compressors 42, 52 or directly thereto via bypass valve 102, as is described herein in more detail.

When bypass valve 102 is closed, the cooled bleed air is directed to compressors 42, 52 through a conduit 58. The bleed air is then compressed and raised in temperature and subsequently directed to manifold 100 and into, through, and out of secondary heat exchangers 26, 28 where the compressed bleed air passes in heat exchange relationship with the ram cooling air. The cooled bleed air exits the secondary heat exchangers 26, 28 and is directed through a conduit 60 that branches into a conduit 62 and a conduit 64. Conduit 62 directs the cooled bleed air to cabin supply line 32, and conduit 64 directs the cooled bleed air through a condenser 66 and water collector 68 before entering turbines 44, 54. The air is expanded and cooled in turbines 44, 54 and subsequently directed back to condenser 66 through a conduit 70 to provide cooling to the air in conduit 64. The bleed air in conduit 70 is then further expanded and cooled in turbines 46, 56 and supplied to the aircraft cabin (or other aircraft components) via supply line 32.

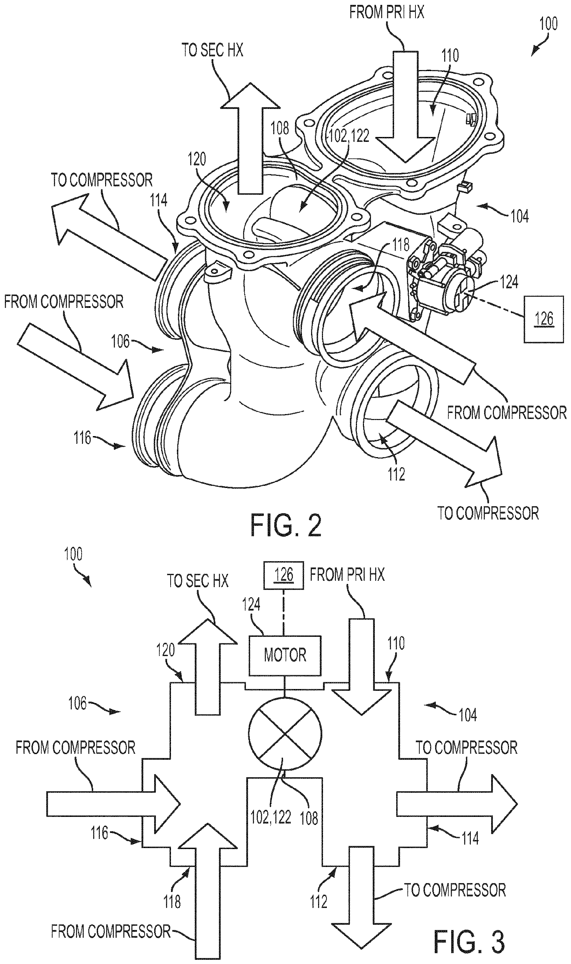

With reference to FIGS. 2 and 3, compressor manifold 100 is fluidly coupled to dual heat exchanger 14 and includes a primary section 104 and a secondary section 106 fluidly separated by common septum or wall 108. Bypass valve 102 is oriented, for example, within wall 108 between sections 104, 106. Manifold primary section 104 includes an inlet port 110 and outlet ports 112 and 114. Manifold secondary section 106 includes inlet ports 116 and 118 and an outlet port 120.

In the exemplary embodiment, primary section 104 receives cooled bleed air through inlet port 110 from primary heat exchangers 22, 24. When valve 102 is closed, the bleed air is directed to compressors 42, 52 through outlet ports 112, 114 and conduits 58. After compression, the bleed air enters secondary section 106 through inlet ports 116, 118 and is directed to secondary heat exchangers 26, 28 through outlet port 120.

When valve 102 is opened, the cooled bleed air from primary heat exchangers 22, 24 is supplied directly to secondary heat exchangers 26, 28, thus bypassing compressors 42, 52. For example, at high altitude, it may be advantageous to avoid having to incur the pressure drop associated with going through compressors 42, 52. As such, bypassing the compressors minimizes the pressure drop of system 10 so that the system can draw pressure from a lower stage of the engine, thereby resulting in reduced fuel consumption.

As shown in FIGS. 2 and 3, bypass valve 102 is a modulating valve 122 actuated by a motor 124. A controller 126 is in signal communication with motor 124 and actuates motor 124 and valve 122 at a predetermined time. For example, controller 126 may actuate valve 122 when the aircraft reaches a predetermined altitude.

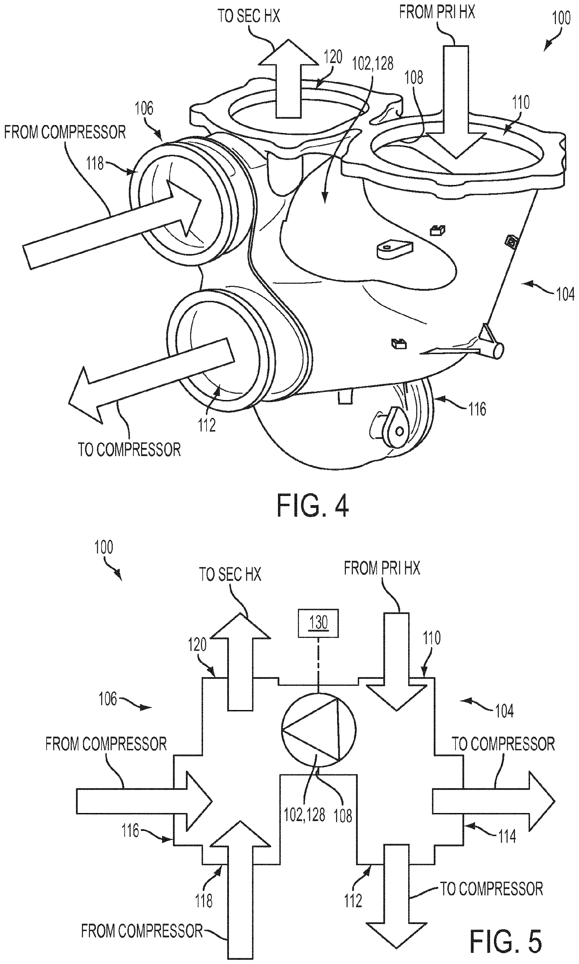

FIGS. 4 and 5 illustrate an alternative embodiment of multi-port manifold 100 where bypass valve 102 is a check valve 128. An altitude valve 130 may be operatively associated with check valve 128 and configured to move check valve 128 to the open position at a predetermined altitude. As shown in FIG. 1, altitude valve 130 may be positioned on conduit line 62, which may be the lowest system resistance when bypass valve 102 is opened. Alternatively, bypass valve 120 may be any suitable type of valve that enables system 10 to function as described herein.

A method of fabricating multi-port compressor 100 includes forming primary section 104 and forming secondary section 106 separated by wall 108. Primary section 104 is formed with inlet port 110 and outlet ports 112, 114, and secondary section 106 is formed with inlet ports 116, 118 and outlet port 120. Bypass valve 102 is positioned between primary section 104 and 106 to selectively fluidly couple sections 104, 106.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An air generation unit (10) for an aircraft, comprising a heat exchanger (14) having a primary heat exchanger (22) and a secondary heat exchanger (26), the heat exchanger (14) configured to receive and cool a fluid, two compressors (42, 52) configured to receive the cooled fluid from the primary heat exchanger (22), and a compressor manifold (100), the compressor manifold (100) for fluid communication with the primary heat exchanger (22) and the secondary heat exchanger (26), the compressor manifold (100) comprising:
a primary section (104) having a primary inlet port (110), a first primary outlet port (112), and a second primary outlet port (114), the primary section (104) configured to receive a fluid from the primary heat exchanger (22) through the primary inlet port (110) and direct the fluid to the two compressors (42, 52) through the first and second primary outlet ports (112; 114);
a secondary section (106) having a first secondary inlet port (116), a second secondary inlet port (118), and a secondary outlet port (120), the secondary section (116) configured to receive the fluid from the two compressors (42, 52) through the first and second secondary inlet ports (116, 118) and direct the fluid to the secondary heat exchanger (26) through the secondary outlet port (120), wherein the secondary section (106) is fluidly separated from the primary section (104) by a common wall (108); and
a bypass valve (102) positioned within the common wall (108) between the primary section (104) and the secondary section (106), the bypass valve (102) movable between a closed position and an open position where the bypass valve (102) fluidly couples the primary section (104) and the secondary section (106) to bypass the two compressors (42, 52).

2. The air generation unit of claim 1, wherein the bypass valve is a modulating valve (122).

3. The air generation unit of claim 2, wherein the compressor manifold further comprises an electric motor (124) coupled to the modulating valve (122) to move the modulating valve (122) between the closed position and the open position.

4. The air generation unit of claim 3, wherein the compressor manifold further comprises a controller (126) in signal communication with the electric motor (124), wherein the controller (126) is configured to move the modulating valve (122) from the closed position to the open position when the compressor manifold (100) exceeds a predetermined altitude.

5. The air generation unit of claim 1, wherein the bypass valve is a check valve (128).

6. The air generation unit of claim 5, wherein the compressor manifold further comprises an altitude valve (130) operably associated with the check valve (128), wherein the altitude valve (130) is configured to move the check valve (128) from the closed position to the open position when the altitude valve (130) exceeds a predetermined altitude.

## Patentansprüche

1. Luftgenerator (10) für ein Luftfahrzeug, umfassend einen Wärmetauscher (14), der einen primären Wärmetauscher (22) und einen sekundären Wärmetauscher (26) aufweist, wobei der Wärmetauscher (14) konfiguriert ist, um ein Fluid aufzunehmen und zu kühlen, zwei Kompressoren (42, 52), die konfiguriert sind, um das gekühlte Fluid vom primären Wärmetauscher (22) aufzunehmen, und einen Kompressorverteiler (100), wobei der Kompressorverteiler (100) der Fluidkommunikation mit dem primären Wärmetauscher (22) und dem sekundären Wärmetauscher (26) dient, wobei der Kompressorverteiler (100) Folgendes umfasst:
einen primären Abschnitt (104), der einen primären Eintrittsanschluss (110), einen ersten primären Austrittsanschluss (112) und einen zweiten primären Austrittsanschluss (114) aufweist, wobei der primäre Abschnitt (104) konfiguriert ist, um ein Fluid von dem primären Wärmetauscher (22) durch den primären Eintrittsanschluss (110) aufzunehmen und das Fluid zu den zwei Kompressoren (42, 52) durch den ersten und den zweiten primären Austrittsanschluss (112; 114) zu leiten;
einen sekundären Abschnitt (106), der einen ersten sekundären Eintrittsanschluss (116), einen zweiten sekundären Eintrittsanschluss (118) und einen sekundären Austrittsanschluss (120) aufweist, wobei der sekundäre Abschnitt (116) konfiguriert ist, um das Fluid von den zwei Kompressoren (42, 52) durch den ersten und den zweiten sekundären Eintrittsanschluss (116, 118) aufzunehmen und das Fluid an den sekundären Wärmetauscher (26) durch den sekundären Austrittsanschluss (120) zu leiten, wobei der sekundäre Abschnitt (106) fluidmäßig von dem primären Abschnitt (104) durch eine gemeinsame Wand (108) getrennt ist; und
ein Umleitventil (102), das innerhalb der gemeinsamen Wand (108) zwischen dem primären Abschnitt (104) und dem sekundären Abschnitt (106) angeordnet ist, wobei das Umleitventil (102) zwischen einer geschlossenen Position und einer geöffneten Position bewegt werden kann, in der das Umleitventil (102) eine Fluidverbindung zwischen dem primären Abschnitt (104) und dem sekundären Abschnitt (106) herstellt, um die zwei Kompressoren (42, 52) zu umgehen.

2. Luftgenerator nach Anspruch 1, wobei das Umleitventil ein Modulierventil (122) ist.

3. Luftgenerator nach Anspruch 2, wobei der Kompressorverteiler ferner einen Elektromotor (124) umfasst, der mit dem Modulierventil (122) gekoppelt ist, um das Modulierventil (122) zwischen der geschlossenen Position und der geöffneten Position zu bewegen.

4. Luftgenerator nach Anspruch 3, wobei der Kompressorverteiler ferner eine Steuerung (126) in Signalkommunikation mit dem Elektromotor (124) umfasst, wobei die Steuerung (126) konfiguriert ist, um das Modulierventil (122) von der geschlossenen Position in die geöffnete Position zu bewegen, wenn der Kompressorverteiler (100) eine vorbestimmte Höhe überschreitet.

5. Luftgenerator nach Anspruch 1, wobei das Umleitventil ein Rückschlagventil (128) ist.

6. Luftgenerator nach Anspruch 5, wobei der Kompressorverteiler ferner ein Höhenventil (130) umfasst, das in Wirkverbindung mit dem Rückschlagventil (128) steht, wobei das Höhenventil (130) konfiguriert ist, um das Rückschlagventil (128) von der geschlossenen Position in die geöffnete Position zu bewegen, wenn das Höhenventil (130) eine vorbestimmte Höhe überschreitet.

## Revendications

1. Unité de génération d'air (10) pour un aéronef, comprenant un échangeur de chaleur (14) ayant un échangeur de chaleur primaire (22) et un échangeur de chaleur secondaire (26), l'échangeur de chaleur (14) étant conçu pour recevoir et refroidir un fluide, deux compresseurs (42, 52) conçus pour recevoir le fluide refroidi en provenance de l'échangeur de chaleur primaire (22), et un collecteur de compresseur (100), le collecteur de compresseur (100) étant conçu pour la communication fluidique avec l'échangeur de chaleur primaire (22) et l'échangeur de chaleur secondaire (26), le collecteur de compresseur (100) comprenant :
une section primaire (104) ayant un port d'entrée primaire (110), un premier port de sortie primaire (112) et un second port de sortie primaire (114), la section primaire (104) étant conçue pour recevoir un fluide en provenance de l'échangeur de chaleur primaire (22) à travers le port d'entrée primaire (110) et pour diriger le fluide vers les deux compresseurs (42, 52) à travers les premier et second ports de sortie primaires (112 ; 114) ;
une section secondaire (106) ayant un premier port d'entrée secondaire (116), un second port d'entrée secondaire (118) et un port de sortie secondaire (120), la section secondaire (116) étant conçue pour recevoir le fluide en provenance des deux compresseurs (42, 52) à travers les premier et second ports d'entrée secondaires (116, 118) et pour diriger le fluide vers l'échangeur de chaleur secondaire (26) à travers le port de sortie secondaire (120), dans laquelle la section secondaire (106) est fluidiquement séparée de la section primaire (104) par une paroi commune (108) ; et
une soupape de dérivation (102) positionnée à l'intérieur de la paroi commune (108) entre la section primaire (104) et la section secondaire (106), la soupape de dérivation (102) pouvant être déplacée entre une position fermée et une position ouverte dans laquelle la soupape de dérivation (102) couple fluidiquement la section primaire (104) et la section secondaire (106) pour contourner les deux compresseurs (42, 52).

2. Unité de génération d'air selon la revendication 1, dans laquelle la soupape de dérivation est une soupape modulatrice (122) .

3. Unité de génération d'air selon la revendication 2, dans laquelle le collecteur de compresseur comprend en outre un moteur électrique (124) couplé à la soupape modulatrice (122) pour déplacer la soupape modulatrice (122) entre la position fermée et la position ouverte.

4. Unité de génération d'air selon la revendication 3, dans laquelle le collecteur de compresseur comprend en outre un dispositif de commande (126) en communication par signaux avec le moteur électrique (124), dans laquelle le dispositif de commande (126) est conçu pour déplacer la soupape modulatrice (122) de la position fermée à la position ouverte lorsque le collecteur de compresseur (100) dépasse une altitude prédéterminée.

5. Unité de génération d'air selon la revendication 1, dans laquelle la soupape de dérivation est une soupape de retenue (128) .

6. Unité de génération d'air selon la revendication 5, dans laquelle le collecteur de compresseur comprend en outre une soupape d'altitude (130) associée de manière opérationnelle à la soupape de retenue (128),
dans laquelle la soupape d'altitude (130) est conçue pour déplacer la soupape de retenue (128) de la position fermée à la position ouverte lorsque la soupape d'altitude (130) dépasse une altitude prédéterminée.
